# EUROPEAN PATENT SPECIFICATION

(11) **EP 1 480 285 B1**
(45) Date of publication and mention of the grant of the patent: **20.08.2008**
(21) Application number: 04011318.5
(22) Date of filing: 12.05.2004
(51) Int. Cl.: H01M 8/10, H01M 4/86

(54) **Membrane electrode assembly for polymer electrolyte fuel cell**
Membranelektrodenanordnung für Polymerelektrolytbrennstoffzelle
Ensemble membrane-électrode pour une cellule à combustible à électrolyte polymère

(30) Priority: 21.05.2003 JP 2003143046
(43) Date of publication of application: 24.11.2004
(73) Proprietor: HONDA MOTOR CO., LTD., Tokyo (JP)
(72) Inventor: Kohyama, Katsuhiko, Wako-shi Saitama (JP); Shinkai, Hiroshi, Wako-shi Saitama (JP); Tani, Masaki, Wako-shi Saitama (JP)
(74) Representative: Herzog, Markus

(56) References cited:
- WO-A-01/80342
- US-A1- 2003 072 991

## Description

### Field of the Invention

The present invention relates to a membrane electrode assembly for a polymer electrolyte fuel cell.

### Description of the Related Art

As this type of membrane electrode assembly, the one having, as basic components, a polymer electrolyte membrane, a pair of electrode layers sandwiching the polymer electrolyte membrane, and a pair of gas-diffusion layers disposed outside the respective electrode layers is conventionally known. In this case, each of the gas-diffusion layers is constituted of carbon paper, carbon cloth or the like, and each of the electrode layers is constituted of, for example, platinum supporting carbon black and a binder (for example, see Japanese Patent Application Laid-Open No. 7-57742).

However, since the diameter of the carbon fiber forming carbon paper or the like is generally 8 to 10 µm, and the surface roughness of the contact surface of the gas-diffusion layer with the electrode layer becomes large, there is a fear of an increased contact resistance between the gas-diffusion layer and the electrode layer to cause reduction in the power generating performance.

Document US 2003 072 991 discloses a membrane electrode assembly comprising a catalytic layer comprising a binder, carbon particles and carbon whiskers, wherein the content of carbon whiskers in the catalytic layer is 10 wt% ≤ G_{w} ≤ 25 wt %.

### SUMMARY OF THE INVENTION

The present invention has an object to provide a membrane electrode assembly for a polymer electrolyte fuel cell capable of keeping high power generation performance by reducing the contact resistance between the gas-diffusion layer and the electrode layer.

In order to achieve the above-described object, there is provided a membrane electrode assembly for a polymer electrolyte fuel cell having, as basic components, a polymer electrolyte membrane, a pair of electrode layers which sandwich the polymer electrolyte membrane, and a pair of gas-diffusion layers disposed outside the respective electrode layers, wherein electric medium layers are respectively provided between the electrode layer and the gas-diffusion layer at one side and between the electric layer and the gas-diffusion layer at the other side, each of the electric medium layers is constituted of a plurality of carbon whiskers, a plurality of carbon particles and a binder, and a content G_{W} of the carbon whiskers in each of the electric medium layer is 10wt% ≤ G_{W} ≤ 25wt%.

When the content G_{W} of the carbon whiskers is set as described above and the carbon particles are used in combination in each of the electric medium layers, a large number of mutual contacts among the carbon whiskers and connections among the carbon whiskers by the carbon particles can be allowed to occur, so that the surface resistance of the electric medium layer becomes small. The diameter of the carbon whiskers is 0.1 to 0.2 µm, and the length of the carbon whiskers is short, so that the number of contact points of the carbon whiskers with the carbon fibers of the gas-diffusion layers and the carbon particles of the electrode layers become large. As a result, the contact resistances between the gas-diffusion layers and the electrode layers are reduced, and the power generating performance can be kept high. However, when the carbon whisker content G_{W} is G_{W}<10 wt%, the surface resistance of the electric medium layer is high, and the power generating performance is low. On the other hand, when G_{W}>25 wt%, the surface resistance of the electric medium layer becomes low, but the power generating performance reduces.

The above-mentioned object, other objects, characteristics, and advantages of the present invention will become apparent from an explanation of a preferred embodiment, which will be described in detail below by reference to the attached drawings.

### BRIEF DESCRIPTION OF THE DRAWINGS

FIG. 1 is a cross-sectional view of a membrane electrode assembly according to an embodiment of the present invention.
FIG. 2 is a graph showing the relationship between a content of carbon whiskers and surface resistance in an electric medium layer.
FIG. 3 is a graph showing the relationship between a current density and voltage in a fuel cell.
FIG. 4 is a graph showing the relationship between the content of the carbon whiskers and a critical current density in the fuel cell.

### DESCRIPTION OF THE PREFERRED EMBODIMENT

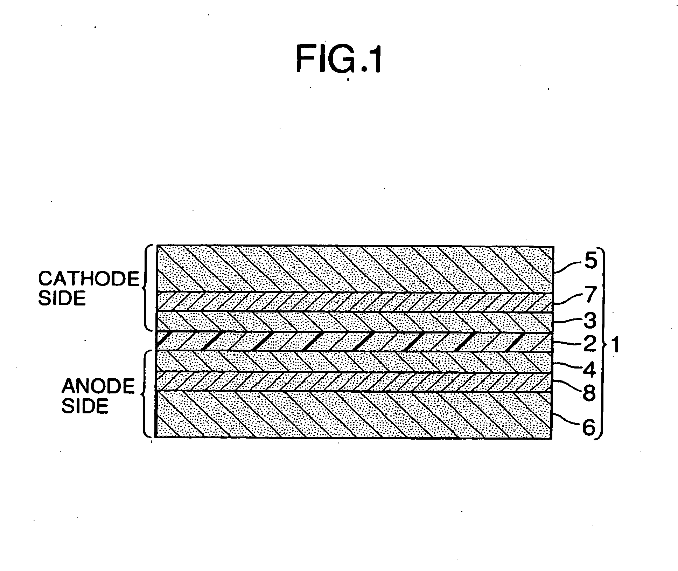

In FIG. 1, a membrane electrode assembly 1 which is used for a polymer electrolyte fuel cell has, as basic components, a polymer electrolyte membrane 2, a pair of electrode layers sandwiching the polymer electrolyte membrane 2, namely, a cathode-side electrode layer 3 and an anode-side electrode layer 4, and a pair of gas-diffusion layers 5 and 6 disposed outside the respective electrodes 3 and 4.

In this embodiment, electric medium layers 7 and 8 are provided respectively between the cathode-side electrode layer 3 and the gas-diffusion layer 5 and between the anode-side electrode layer 4 and the gas-diffusion layer 6. Each of the electric medium layers 7 and 8 are constitutedof a plurality of carbon whiskers, aplurality of carbon particles and a binder. A carbon whisker content G_{W} in each of the electric medium layers 7 and 8 is set at 10wt% ≤ G_{C} ≤ 25wt%, a carbon particle content G_{P} is set at 20wt% ≤ G_{P} ≤ 50wt%, and a binder content G_{E} is set at 20wt% ≤ G_{E} ≤ 50wt%, respectively. It should be noted that when the carbon particle content Gp is Gp < 20wt%, there is no advantage in using the carbon particles, and when Gp > 50wt%, dispersibility of the binder becomes worse. When the binder content G_{E} is G_{E} < 20 wt%, the binder function becomes insufficient; and when G_{E} > 50 wt%, the pore amount of the electric medium layers 7 and 8 becomes insufficient. As carbon whiskers, vapor phase epitaxy carbon fibers are preferable.

When the carbon whisker content G_{W} is set as described above and the carbon particles are used in combination in each of the electric medium layers 7 and 8, a large number of mutual contacts among the carbon whiskers and connections among the carbon whiskers by the carbon particles can be allowed to occur, so that the surface resistances of the electric medium layers 7 and 8 become small. The carbon whisker has a diameter of 0.1 to 0.2 µm, and has a small length, so that the number of the contact points of the carbon whiskers with the carbon fibers of the gas-diffusion layers 5 and 6 and the carbon particles of the electrode layers 3 and 4 becomes large. As a result, the contact resistances between the gas-diffusion layers 5 and 6, and the electrode layers 3 and 4 are reduced, and the power generating performance can be kept high. Since it is possible to use an electrolyte material as the binder of the electrode layers 3 and 4, if a material similar to the electrolyte material is used as the binder of the electric medium layers 7 and 8, bindability between the electrode layers 3 and 4 and the electric medium layers 7 and 8 is made favorable, and the electrode layers 3 and 4 and the electric medium layers 7 and 8 can be integrated. This prevents generation of gaps between the electrode layers 3 and 4, and the electric medium layers 7 and 8, so that stay of produced water caused by the gaps is avoided.

Hereinafter, particular examples will be explained.

### A. Gas-diffusion Layer

As the cathode-side and the anode-side gas-diffusion layers 5 and 6, there were prepared gas-diffusion layers by diffusing and attaching FEP (fluorinated ethylene propylene) to a surface and interior, namely, the entirety of the carbon paper (made by Toray Industries, Inc., trade name TGP-H-060, 190 µm thick) to impart water repellency thereto. In this case, the FEP content G_{F} was set at G_{F} ≥ 0.2wt% in an equation G_{F} = {b/ (a+b) } × 100 (wt%) where the weight of the carbon paper is a and the weight of the FEP is b, and in the embodiment, G_{F} = 0.25wt%.

### B-1. Preparation of Slurry for Electric Medium Layer

As the aggregate of carbon whiskers, the vapor phase epitaxy carbon fiber (made by Showa Denko K.K., Trade name VGCF) of about 0.2 µm in diameter and about 15 µm long was prepared; as the aggregate of the carbon particles, carbon black (made by Kecchen Black International Co., ltd., Trade name Kecchen Black EG600JD) was prepared; and as the binder, nafion (made by DuPont, Trade name Nafion SE) was prepared. They were measured to be in various loadings, and each compound of 12.5 g was charged into the ball mill with the NMP (N-methyl pyrolidone) solution of 0.1 L and was agitated and mixed, thereby obtaining various kinds of slurries. Table 1 shows the loadings (contents) of the carbon whiskers, the carbon particles, and the binder in Examples (1) to (8) of the slurry.

**Table 1**

| Slurry | Carbon whiskers G_{W} (wt%) | Carbon particles G_{P} (wt%) | Binder G_{E} (wt%) |
|---|---|---|---|
| Example (1) | 5 | 47.5 | 47.5 |
| Example (2) | 10 | 45.0 | 45.0 |
| Example (3) | 15 | 42.5 | 42.5 |
| Example (4) | 20 | 40.0 | 40.0 |
| Example (5) | 25 | 37.5 | 37.5 |
| Example (6) | 30 | 35.0 | 35.0 |
| Example (7) | 40 | 30.0 | 30.0 |
| Example (8) | 0 | 50.0 | 50.0 |

### B-2. Formation of Electric Medium Layers

Example (1) of the slurry was applied over a surface of the carbon paper constituting the cathode-side gas-diffusion layer 5 so that the dry weight is 2 mg/cm², then the coating layer was dried to obtain the electric medium layer 7 integrated with the cathode side diffusion layer 5. Next, the electric medium layer 8 integrated with the anode-side diffusion layer 6 was obtained by the same method as described above. These layers are called Example (1) being a unit of a two-tier laminated product. Thereafter, by using Examples (2) to (8) of the slurry in sequence, the electric medium layers 7 integrated with the cathode-side diffusion layers 5 and the electric medium layers 8 integrated with the anode-side diffusion layers 6 were obtained in sequence. These layers are called Examples (2) to (8) being units of two-tier laminated products.

### C. Measurement of Surface Resistances of Electric Medium Layers

Two voltage probes were pressed against the electric medium layer 7 (or the electric medium layer 8) in Example (1) of the two-tier laminated product, namely, the surface of Example (1) of the electric medium layer 7, then DC voltage was applied between the probes, in accordance with JIS K7194, then the current which flowed at that time was measured by two current probes pressed against the surface of the electric medium layer 7, and the surface resistance was calculated from the voltage and the current. By the same method, the surface resistances were obtained with respect to Examples (2) to (8) of the electric medium layers 7 (or the electric medium layer 8) in Examples (2) to (8) of the two-tier laminated product. Table 2 shows the contents G_{W} and the surface resistances in Examples (1) to (8) of the electric medium layer 7.

**Table 2**

| Electric medium layer | Carbon whisker G_{W} (wt%) | Surface resistance (Ω·cm²) |
|---|---|---|
| Example (1) | 5 | 80 |
| Example (2) | 10 | 70 |
| Example (3) | 15 | 30 |
| Example (4) | 20 | 20 |
| Example (5) | 25 | 10 |
| Example (6) | 30 | 9 |
| Example (7) | 40 | 8 |
| Example (8) | 0 | 500 |

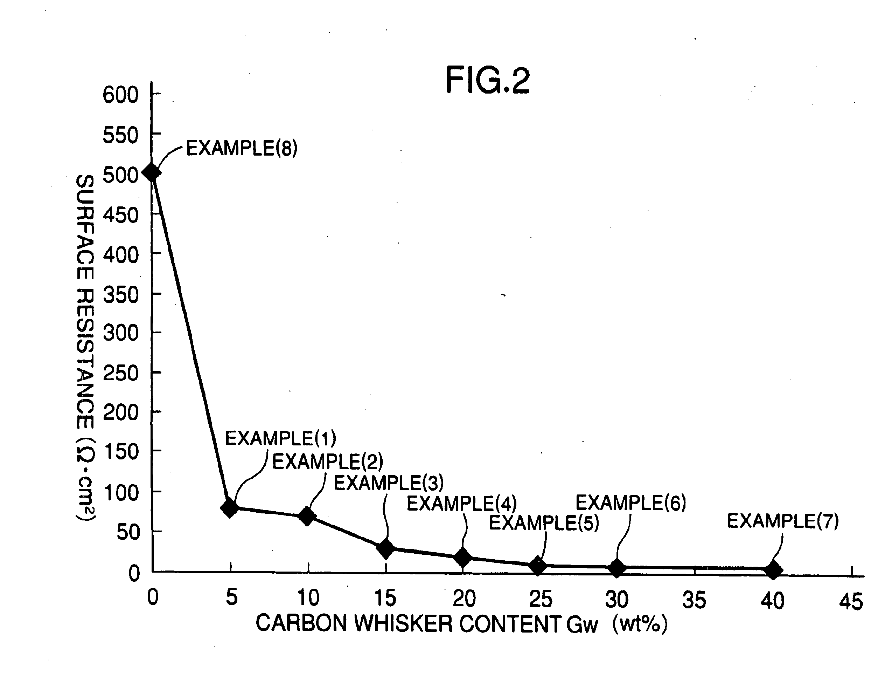

FIG. 2 is a graph showing the relationship between the content G_{W} and the surface resistance based on Table 2. From FIG. 2, it is understood that the surface resistance reduces with the increase in the content G_{W} of the carbon whiskers.

### D-1. Preparation of Paste for Electrode Layers

By allowing the furnace black (made by Kecchen Black International Co., Ltd., Trade name Kecchen Black EC) to support Pt particles so that the weight ratio of them is one to one, and an aggregate, namely, a powder of the Pt supporting carbon particles was obtained. The powder and the powdered nafion (made by DuPont, Trade name Nafion SE) as a proton-conductive binder were weighed to be one to one in weight ratio, and then the nafion was dissolved in 2-propanol that is a solvent to prepare the nafion solution. Thereafter, the powder was charged into the nafion solution and sufficiently mixed, thereby obtaining a paste.

### D-2. Formation of Electrode Layers

The aforesaid paste was silk-screened on the surface of the cathode-side electric medium layer 7 of Example (1) of the two-tier laminated product so that Pt amount was 0.5 mg/cm², then dried at 60°C for ten minutes, and thereafter it was dried under reduced pressure at 120°C, thereby forming the cathode-side electric layer 3. Next, the anode-side electrode layer 4 was formed on the surface of the anode-side electric medium layer 8 of Example (1) of the two-tier laminated product by the same method. They are called Example (1) being a unit of a three-tier laminated product. Similarly, by using Examples (2) to (8) of the two-tier laminated product, the electrode layer 3 which was formed on the surface of the cathode side electric medium layer 7, and the electrode layer 4 which was formed on the surface of the anode-side electric medium layer 8, were obtained in sequence by the same method as described above. They are called Examples (2) to (8) being units of three-tier laminated products.

### E. Production of Membrane Electrode Assemblies

The cathode-side electrode layer 3 of Example (1) of the aforesaid three-tier laminated product was placed on one surface of the polymer electrolyte membrane 2 constituted of nafion (made by DuPont, trade name Nafion 112), and the anode-side electrode layer 4 of Example (1) of the aforesaid three-tier laminated product was placed on the other surface of the polymer electrolyte membrane 2, thereby forming a layered product. Then, hot press was applied to the layered product under the conditions of 140°C, 2.5 MPa, and 15 minutes, thereby obtaining Example (1) of the membrane electrode assembly. Thereafter, by using the polymer electrolyte membrane 2 as describe above and Examples (2) to (8) of the three-tier laminated product, Examples (2) to (8) of the membrane electrode assembly were obtained by the same method as described above.

### F. Power Generating Performance of Fuel Cell

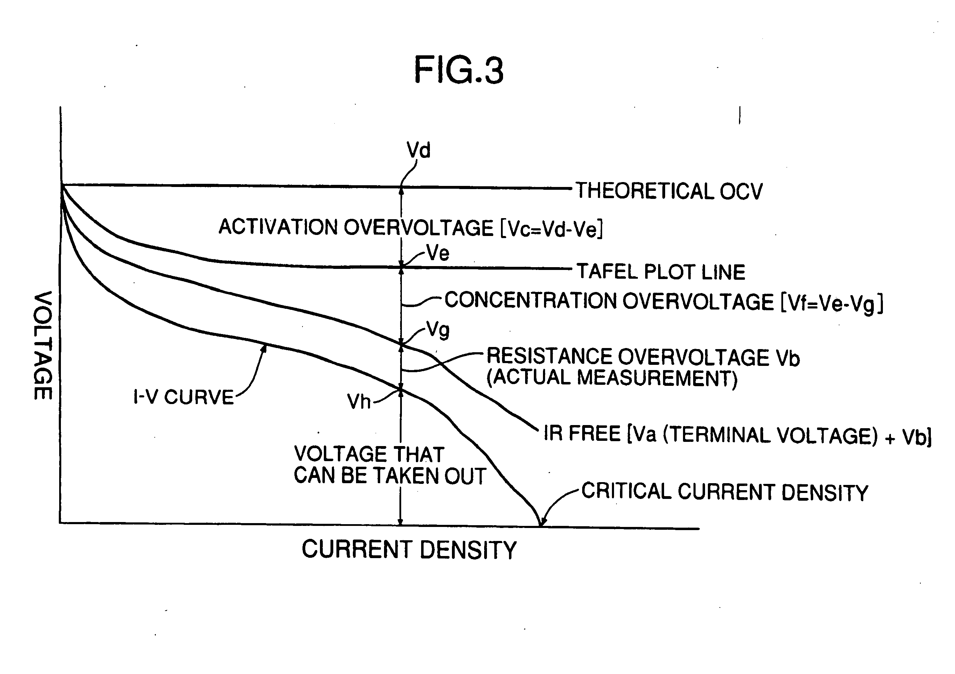

By using Examples (1) to (8) of the membrane electrode assembly, Examples (1) to (8) of the fuel cell (cell) corresponding to them were assembled, and the critical current density was obtained with respect to them. The critical current density means the current density when the voltage is assumed to be zero in the I-V curve as shown in FIG. 3, and if this is large, the power generating performance is high. Thus, the following operation was performed to obtain the I-V curve.
(1) The theoretical OCV (open circuit voltage) was obtained for the fuel cell. (2) In the power generation test, the terminal voltage Va and the resistance overvoltage Vb were measured, and from them, the IR free, namely, IR free = Va+Vb was obtained. (3) By applying Tafel's equation that is an equation showing the relationship between the activation overvoltage Vc of the electrode and the electrolytic current density, the Tafel plot line was obtained from the voltage corresponding to the current density of 0.01 to 0.05 A/cm². (4) The activation overvoltage Vc was obtained as Vc = Vd - Ve from the voltage Vd of the theoretical OCV and the voltage Ve of the Tafel plot line. (5) The concentration overvoltage Vf was obtained as Vf = Ve - Vg from the voltage Ve of the Tafel plot line and the voltage Vg of the IR free.

From the result of the above, the voltage Vh of the I-V curve was obtained as Vh = Vd - (Vc + Vf + Vb), then the I-V curve was obtained based on this, and the critical current density was further obtained from the I-V curve. The resistance overvoltage Vb becomes low when the surface resistance is low in Table 2 and FIG. 2, and therefore reducing the surface resistance is effective in making the critical current density large.

Table 3 shows the content G_{W} of the carbon whiskers and the critical current density in Examples (1) to (8) of the fuel cell. The critical current densities are shown in both the case of using pure oxygen as a gas for the cathode side and the case of using air.

**Table 3**

| Fuel cell Fuel cell | Carbon whisker G_{W} (wt%) | Critical current density (A/g Pt) | |
|---|---|---|---|
| | | Pure oxygen | Air |
| Example (1) | 5 | 50 | 55 |
| Example (2) | 10 | 65 | 65 |
| Example (3) | 15 | 68 | 78 |
| Example (4) | 20 | 72 | 80 |
| Example (5) | 25 | 60 | 60 |
| Example (6) | 30 | 57 | 56 |
| Example (7) | 40 | 48 | 50 |
| Example (8) | 0 | 40 | 45 |

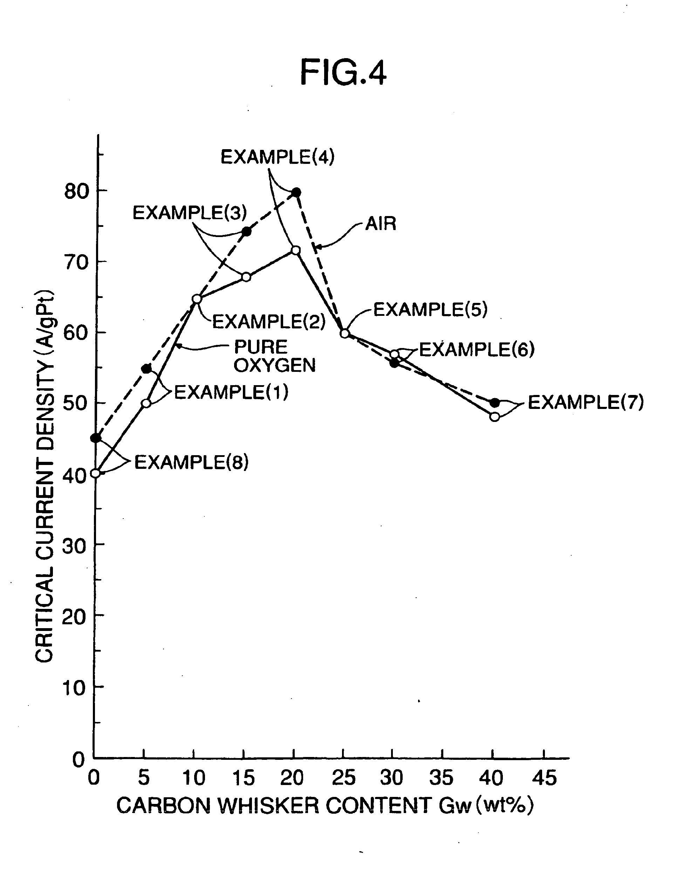

FIG. 4 is a graph showing the relationship between the content of the carbon whiskers and the critical current density based on Table 3. As is obvious from Table 3 and FIG. 4, if the content G_{W} of the carbon whiskers is set at 10wt% ≤ G_{W} ≤ 25wt%, the critical current density can be made large as in Examples (2) to (5). The content G_{W} of the carbon whiskers is preferably 15wt% ≤ G_{W} ≤ 20wt%

According to the present invention, with the above-described arrangement, there is provided a membrane electrode assembly for a polymer electrolyte fuel cell, which is capable of keeping the power generating performance high by reducing the contact resistance between the gas-diffusion layers and the electrode layers.

A membrane electrode assembly for a polymer electrolyte fuel cell has, as basic components, a polymer electrolyte membrane, a pair of electrode layers which sandwich the polymer electrolyte membrane, and a pair of gas-diffusion layers disposed outside the respective electrode layers. Electric medium layers are respectively provided between the electrode layer and the gas-diffusion layer at one side and between the electric layer and the gas-diffusion layer at the other side. Each of the electric medium layers is constituted of a plurality of carbon whiskers, a plurality of carbon particles and a binder including an electrolyte material. A content G_{W} of the carbon whiskers in each of the electric medium layers is set at 10wt% ≤ G_{W} ≤ 25wt%. Thus, the membrane electrode assembly for the polymer electrolyte fuel cell can keep a high power generating performance by reducing the contact resistance between the gas-diffusion layers and the electrode layers.

## Claims

1. A membrane electrode assembly for a polymer electrolyte fuel cell having, as basic components, a polymer electrolyte membrane, a pair of electrode layers which sandwich the polymer electrolyte membrane, and a pair of gas-diffusion layers disposed outside the respective electrode layers, wherein electric medium layers are respectively provided between the electrode layer and the gas-diffusion layer at one side and between the electric layer and the gas-diffusion layer at the other side, each of the electric medium layers is constituted of a plurality of carbon whiskers, a plurality of carbon particles and a binder, and a content G_{W} of the carbon whiskers in each of the electric medium layer is 10wt% ≤ G_{W} ≤ 25wt%.

2. The membrane electrode assembly for the polymer electrolyte fuel cell according to claim 1, wherein the carbon whisker is a vapor phase epitaxy carbon fiber.

## Patentansprüche

1. Membranelektrodenanordnung für eine Polymerelektrolytbrennstoffzelle, welche als Basiskomponenten eine Polymerelektrolytmembran, ein Paar von Elektrodenschichten, zwischen welchen die Polymerelektrolytmembran angeordnet ist, und ein Paar von Gasdiffusionsschichten, die außen an den jeweiligen Elektrodenschichten angeordnet sind, aufweist, wobei
- Schichten mit elektrischem Medium jeweils zwischen der Elektrodenschicht und der Gasdiffusionsschicht auf der einen Seite und zwischen der Elektrodenschicht und der Gasdiffusionsschicht auf der andern Seite bereitgestellt sind,
- jede der Schichten mit elektrischem Medium aus einer Mehrzahl von Carbon-Whiskern, eine Mehrzahl von Carbon-Partikeln und einem Bindematerial gebildet ist, und
- für ein Gehalt G_{w} der Carbon-Whisker in jeder der Schichten mit elektrischem Medium gilt: 10 Gew.-% ≤ G_{w} ≤ 25 Gew.-%.

2. Membranelektrodenanordnung für die Polymerelektrolytbrennstoffzelle nach Anspruch 1, wobei der Carbon-Whisker eine Dampfphasen-Epitaxie-Carbonfaser ist.

## Revendications

1. Assemblage de membrane-électrodes pour une pile à combustible à électrolyte polymère ayant, à titre de composants basiques, une membrane à électrolyte polymère, une paire de couches d'électrodes qui prennent en sandwich la membrane à électrolyte polymère, et une paire de couches de diffusion de gaz disposées à l'extérieur des couches d'électrodes respectives,
dans lequel les couches de milieu électrique sont respectivement disposées entre la couche d'électrode et la couche de diffusion de gaz sur un côté et entre la couche électrique et la couche de diffusion de gaz sur l'autre côté, chacune des couches de milieu électrique est constituée d'une pluralité de barbes de carbone, d'une pluralité de particules de carbone et d'un liant, et la teneur G_{w} en barbes de carbone dans chacune des couches de milieu électrique est de 10 % en poids ≤ G_{w} ≤ 25 % en poids.

2. Assemblage de membrane-électrodes pour pile à combustible à électrolyte polymère selon la revendication 1, dans lequel les barbes de carbone sont des fibres de carbone obtenues par épitaxie en phase vapeur.
